# EUROPÄISCHE PATENTANMELDUNG

(11) **EP 2 196 633 A1**
(43) Veröffentlichungstag der Anmeldung: **16.06.2010**
(21) Anmeldenummer: 08021764.9
(22) Anmeldetag: 15.12.2008
(51) Int. Cl.: F01D 15/10, F02C 7/08, F02C 7/224

(54) **Kraftwerk mit einer Turbineneinheit und einem Generator**

(71) Anmelder: Siemens Aktiengesellschaft, 80333 München (DE)
(72) Erfinder: Amedick, Volker, 47198 Duisburg (DE); Blomeyer, Malte, Dr., 45472 Müllheim an der Ruhr (DE); Cravero, Leandro, Dr., 45479 Mülheim an der Ruhr (DE); Deuker, Eberhard, Dr., 45481 Mülheim and der Ruhr (DE); Heitfeld, Hendrik, 45966 Gladbeck (DE); Kaufmann, Carsten, 45478 Mülheim a.d. Ruhr (DE); Klocke, Meinolf, Dr., 58452 Witten (DE); Völker, Stefan, Dr., 47447 Moers (DE)

(57) **Zusammenfassung**

Die Erfindung geht aus von einem Kraftwerk (2, 44) mit einer Turbineneinheit (4) mit einer Turbine (10), einem zur Kraftübertragung mit der Turbine (10) verbundenen Generator (24) und einer Kühleinrichtung (30, 36) zum Kühlen des Generators (24).

Es wird vorgeschlagen, dass die Kühleinrichtung (30, 36) dazu vorgesehen ist, Abwärme aus dem Generator (24) an eine Einrichtung des Kraftwerks (2, 44) abzugeben. Es kann Abwärme im Kraftwerksprozess genutzt und so ein hoher Wirkungsgrad erreicht werden.

## Beschreibung

Die Erfindung betrifft ein Kraftwerk mit einer Turbineneinheit mit einer Turbine, einem zur Kraftübertragung mit der Turbine verbundenen Generator und einer Kühleinrichtung zum Kühlen des Generators.

Es sind verschiedene Kraftwerkssysteme bekannt, bei denen Primärenergie mittels eines Generators in elektrische Energie umgewandelt wird. Bei diesen Kraftwerken wird in der Regel die Wärme eines Wärmeerzeugers zum Antrieb einer Wärmekraftmaschine benutzt, die mechanisch mit dem Generator verbunden ist. Sowohl bei der Energieumwandlung von thermischer Energie in mechanische Energie im Primärenergieerzeuger, beispielsweise einer Turbine, als auch der mechanischen Energie in elektrische Energie im Generator wird die jeweils zur Verfügung stehende Energie nicht vollständig ausgenutzt. Restenergie wird - üblicherweise in Form von Wärme - an die Umgebung abgegeben.

Bei einem Generator wird diese Wärme üblicherweise über ein Kühlmedium, z.B. in einem geschlossenen Kreislauf, abgeführt, um ein Überhitzen des Generators zu verhindern. Da diese Wärme auf einem geringen Temperaturniveau vorliegt, üblicherweise unter 100° C, wird diese Wärme ungenutzt an die Umgebung abgegeben und ist damit ein Verlust des Kraftwerksprozesses.

Es ist eine Aufgabe der Erfindung, ein Kraftwerk mit einem hohen Wirkungsgrad anzugeben.

Diese Aufgabe wird durch ein Kraftwerk der eingangs genannten Art gelöst, bei dem die Kühleinrichtung erfindungsgemäß dazu vorgesehen ist, Abwärme aus dem Generator an eine Einrichtung des Kraftwerks abzugeben. Durch die Rückführung von Abwärme in den Kraftwerksprozess wird sie dem Kraftwerksprozess nicht entzogen und ist somit kein Verlust. Der Wirkungsgrad des Kraftwerks kann auf diese Weise um den in den Arbeitsprozess zurückgeführten Wärmeanteil erhöht werden. Die Turbine kann eine Gasturbine oder eine Dampfturbine sein.

Durch die Nutzung der Generatorabwärme in einem Kraftwerk mit beispielsweise einer Dampfturbine kann entweder die maximale Temperatur des Dampfs der als Dampfturbine ausgeführten Turbineneinheit erhöht werden oder der Massenstrom durch die Dampfturbine kann erhöht werden. Für einen Gas- und Dampfturbinenblock mit einer Gesamtleistung von 400 bis 500 MW ergibt sich z. B. folgendes Bild: Die vom Generator erzeugte Verlustwärme liegt im Größenbereich von 3 bis 5 MW, wovon etwa 2 bis 4 MW als Leistungssteigerung in den Gas- und Dampfprozess bzw. in einen Dampfprozess zurückgeführt werden können. Bei einem Speisewassermassenstrom von etwa 80 kg pro Sekunde und 3 MW rückgeführter Generatorverlustleistung ergibt sich im Speisewasser eine Temperaturerhöhung von rund 10° C. Bei einer Gesamtleistung von 400 bis 500 MW entspricht dies einer Leistungssteigerung von etwa 0,5 %. Bei reinen Dampfkraftprozessen lässt sich so die Menge des Dampfs reduzieren, die zur Vorwärmung des Speisewassers eingesetzt wird und damit nicht mehr zur Energiegewinnung zur Verfügung steht.

In einer vorteilhaften Ausführungsform der Erfindung umfasst die Turbineneinheit einen Brennstoffvorwärmer, der mit der Kühleinrichtung thermisch verbunden ist. Durch die Abgabe von Abwärme aus dem Generator an den Brennstoffvorwärmer kann die Menge an Primärenergie, die dem Brennstoffvorwärmer ansonsten zugeführt werden müsste, entsprechend verringert werden. Die treibende Kraft für die Rückführung ist die Temperaturdifferenz, denn die Wärme kann nur einem Medium übertragen werden, dass eine geringere Temperatur hat als die Abwärme des Generators. Dies trifft üblicherweise auf den Brennstoff eines fossilen Kraftwerks zu, der in etwa Umgebungstemperatur aufweist. Insbesondere gasförmige oder flüssige Brennstoffe können über einen Wärmekreislauf technisch einfach vorgewärmt werden. Solche Brennstoffe werden insbesondere bei Gasturbinen eingesetzt. Die Vorwärmung des Brennstoffs verringert die notwendige Brennstoffmenge zur Erreichung der oberen Prozesstemperatur im thermodynamischen Kreisprozess, wodurch dessen Wirkungsgrad erhöht wird.

Mit Vorteil weist der Brennstoffvorwärmer einen Wärmetauscher auf, der mit einem Kühlwasserkreislauf der Kühleinrichtung thermisch verbunden ist. Aus Gründen der Sicherheit dürfen Brennstoffe in einem Wärmetauscher nur mit einem nicht oxidierenden Medium kombiniert werden, um bei Leckagen brennbare Mischungen zu vermeiden. Die Abwärme des Generators wird überwiegend über einen Wasserkreislauf vom Generator abgeführt. Über einen Wärmetauscher im Wasserkreislauf können Brennstoffe vorgewärmt werden, ohne dass ein oxidierendes Medium bei einem Leck mit dem Brennstoff in Berührung kommt. Wird zur direkten Kühlung des Generators z.B. Wasserstoff genutzt, kann der äußere Wasserkreislauf durch den Brennstoffvorwärmer ersetzt werden.

Es wird außerdem vorgeschlagen, dass eine Brennstoffzuführung zur Turbine vorteilhafterweise zum Erwärmen des Brennstoffs durch den Generator geführt ist. Der Brennstoff kann die Funktion des Kühlmediums im Generator übernehmen, sodass auf einen separaten Kreislauf zum Abführen von Wärme aus dem Generator, beispielsweise einem Wasserkreislauf, verzichtet werden kann.

In einer weiteren vorteilhaften Ausgestaltung der Erfindung umfasst die Turbineneinheit eine Luftzuführung, die mit der Kühleinrichtung thermisch verbunden ist. Die Eintrittstemperatur von Frischluft, die in einen Verdichter einer Gasturbine eintritt, ist die der Umgebung. Sie kann daher Abwärme aus dem Generator aufnehmen. Hierdurch kann der thermische Wirkungsgrad des Kraftwerks erhöht werden.

Im Teillastbereich wird bei einem kombinierten Gas- und Dampfkraftwerk der Gesamtwirkungsgrad bei fester Leistung erhöht, wenn die Verdichtereintrittstemperatur erhöht wird. Nutzt man in diesem Leistungsbereich die Generatorabwärme zu diesem Zweck, wird eine entsprechende Erhöhung des thermodynamischen Wirkungsgrads des Kraftwerks erreicht. Die Zuführung der Abwärme zur Frischluft kann durch einen Wärmetauscher in der Luftzuführung erfolgen oder dadurch, dass die Luftzuführung durch den Generator geführt ist.

Vorteilhafterweise umfasst das Kraftwerk ein Steuermittel zum Steuern einer Wärmezufuhr vom Generator zur Einrichtung des Kraftwerks. Die Einrichtung kann beispielsweise die Luftzufuhr der Turbineneinheit sein. Insbesondere ist das Steuermittel zum Steuern der Wärmezufuhr in Abhängigkeit einer Vereisungsgefahr der Luftzuführung vorgesehen. Bei Umgebungstemperaturen nahe dem Gefrierpunkt und hoher Luftfeuchtigkeit kann Luft vor dem Verdichtereintritt erwärmt werden, um eine Eisbildung zu vermeiden, die eine Schädigung von Komponenten zur Folge haben kann. Zu diesem Zweck wird üblicherweise verdichtete und damit erwärmte Luft zum Verdichtereintritt zurückgeführt, was zu Lasten des Verdichterwirkungsgrads geht. Wird stattdessen die Abwärme des Generators genutzt, bleibt der Verdichterwirkungsgrad unbeeinflusst und es kann vorteilhaft ein hoher Gesamtwirkungsgrad erreicht werden. Das Steuern des Steuermittels kann einen Regelvorgang umfassen. Als Vereisungsgefahr kann die Wahrscheinlichkeit einer Vereisung bezeichnet werden.

In einer weiteren vorteilhaften Ausführungsform der Erfindung weist die Kühleinrichtung einen offenen Kühlkreislauf und eine Kühlluftzuführung zu einer Luftzuführung der Turbineneinheit auf. Auf diese Weise kann die zur Kühlung des Generators im offenen Kühlkreislauf genutzte Luft direkt als Verbrennungsluft für die Turbineneinheit eingesetzt werden.

Außerdem wird vorgeschlagen, dass die Turbineneinheit einen Luftvorwärmer aufweist, der in einer kühleren Stufe thermisch mit der Kühleinrichtung und in einer wärmeren Stufe mit einer weiteren Wärmequelle des Kraftwerks verbunden ist, beispielsweise mit einem Rauchgaswärmetauscher. In Dampfkraftwerken wird die Verbrennungsluft vor dem Eintritt in den Flammraum des Dampferzeugers typischerweise durch einen Luftvorwärmer erwärmt. Der Luftvorwärmer wird üblicherweise mit Wärme aus Rauchgas gespeist. Allerdings darf das Rauchgas nur bis oberhalb des Taupunkts abgekühlt werden, da es sonst zur Kondensation von Wasser mit Schwefelverbindungen kommt. Dies hätte eine verstärkte Korrosion zur Folge. Da die Wärme von Generator und Rauchgas auf unterschiedlichen Temperaturniveaus vorliegen, können sie zweckmäßigerweise sequentiell zur Vorwärmung der Verbrennungsluft genutzt werden. Zunächst kann die Verbrennungsluft durch Abwärmenutzung des Generators bzw. warme Abluft des Generators vorgewärmt werden und in einem zweiten Schritt kann die Verbrennungsluft durch Wärme aus dem Rauchgas in beispielsweise einem weiteren Wärmetauscher weiter erhitzt werden.

Vorteilhafterweise umfasst die Turbineneinheit einen Speisewassererwärmer, wobei die Kühleinrichtung mit dem Speisewassererwärmer thermisch verbunden ist. Auf diese Weise kann Abwärme des Generators genutzt werden, um das Speisewasser eines Dampfprozesses oder eines Gas- und Dampfprozesses vorzuwärmen. Das heiße Kühlmedium im Generatorkühlkreislauf erreicht beispielsweise eine Temperatur von etwa 80° C. Die Vorwärmung erfolgt zweckmäßigerweise unmittelbar hinter der Speisewasserpumpe, wo der Dampfkreislauf üblicherweise das niedrigste Temperaturniveau erreicht.

Prinzipiell lässt sich die Speisewasservorwärmung auf zwei Arten erreichen: Bei der unmittelbaren Einbindung durchströmt das Speisewasser direkt den Wärmetauscher am Generator. Bei der mittelbaren Einbindung wird auf der Speisewasserseite ein weiterer Wärmetauscher eingesetzt und ein separater Kreislauf überträgt die Wärme vom Generator auf das Speisewasser. Für die mittelbare Einbindung umfasst die Kühleinrichtung vorteilhafterweise einen Kühlwasserkreislauf, der Teil des Speisewasserkreislaufs der Turbineneinheit ist.

Große Kraftwerksanlagen verfügen üblicherweise über einen umfangreichen Gebäudekomplex, der neben den Maschinenhallen und die Leitwarte auch Bürogebäude für die Verwaltung umfasst. In den jeweiligen Gebäuden muss abhängig von Art und Nutzung und unter Berücksichtigung zugehöriger Arbeitsschutzbestimmungen für eine entsprechende Klimatisierung gesorgt werden. Hierzu ist im Winter ein Heizen erforderlich, während im Sommer sowohl in den Bürogebäuden als auch in den Maschinenhallen eine Kühlung der Umgebungsluft sinnvoll ist.

Ist die Kühleinrichtung thermisch mit einer Gebäudeheizung des Kraftwerks verbunden, so kann im Kühlkreislauf anfallende Generatorwärme für eine Gebäudeheizung zur Verfügung gestellt werden.

In einer weiteren Variante kann die Generatorabwärme zum Betrieb einer Absorptionskältemaschine für die Gebäudeklimatisierung verwendet werden. Hierdurch kann Generatorabwärme auch in die Kälteerzeugung einbezogen werden. Die gesamte Energiebilanz des Kraftwerks wird durch die Entlastung des Eigenbedarfsnetzes gesteigert. Der Rückkühlkreislauf des Generators kann entlastet werden, um somit zu einer zusätzlichen Reduzierung des Kraftwerkseigenbedarfs - durch die gesteigerte Kraftwerksnettoleistung - beizutragen.

Die Erfindung wird anhand von Ausführungsbeispielen näher erläutert, die in den Zeichnungen dargestellt sind:

Es zeigen:
FIG 1 eine schematische Darstellung eines Kraftwerks mit einer Turbineneinheit und einem Generator, dessen Abwärme zum Vorheizen eines Brennstoffs verwendet wird,
FIG 2 eine schematische Darstellung analog zu FIG 1, wobei der Brennstoff als Kühlmedium durch den Generator geführt wird,
FIG 3 eine schematische Kraftwerksdarstellung, bei dem Generatorabwärme in einen Luftverdichterzustrom übertragen wird,
FIG 4 eine schematische Kraftwerksdarstellung, bei der Speisewasser einer Dampfturbine zur Erwärmung durch einen Generator geführt wird,
FIG 5 einen Speisewasserkreislauf für eine Dampfturbine, der über einen Wärmetauscher thermisch mit einem Kühlmittelkreislauf eines Generators verbunden ist,
FIG 6 den Speisewasserkreislauf, bei dem Speisewasser als Kühlmedium über einen Zwischenkühlkreislauf des Generators geführt ist,
FIG 7 eine schematische Darstellung eines Generators, dessen Abwärme einer Luftzuführung vor einem Luftvorwärmer für einen Dampferzeuger zugeführt wird und
FIG 8 eine Darstellung analog zu FIG 7, wobei ein Luftstrom zum Luftvorwärmer als Kühlmittelstrom durch den Generator geführt wird.

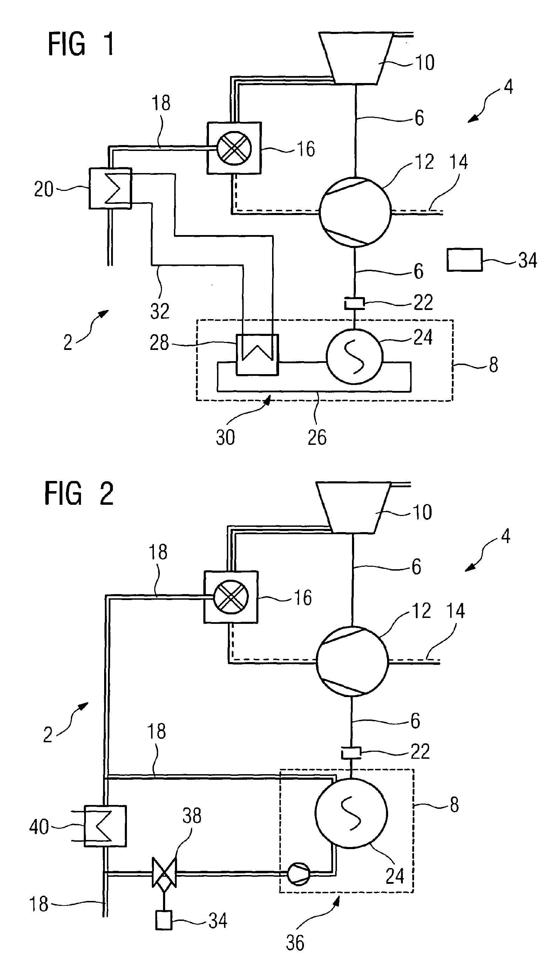

FIG 1 zeigt eine schematische Darstellung eines Aufbaus eines Kraftwerks 2 mit einer Turbineneinheit 4, die über eine Welle 6 mit einem Generator 24 einer Generatoreinheit 8 verbunden ist. Die Turbineneinheit 4 umfasst eine Turbine 10, die als Gasturbine ausgeführt ist und die über die Welle 6 einen Luftverdichter 12 in einer Luftzufuhr 14 zu einer Brennkammer 16 der Turbineneinheit 4 betreibt. In der Brennkammer 16 wird Brennstoff aus einer Brennstoffleitung 18 zu der verdichteten Luft gemischt und verbrannt. Die heißen Abgase werden der Turbine 10 zu deren Betrieb zugeführt. Außerdem umfasst die Turbineneinheit 4 einen Brennstoffvorwärmer 20 in der Brennstoffleitung 18 zum Vorwärmen des gasförmigen Brennstoffs.

Während des Betriebs des Kraftwerks 2 treibt die Turbine 10 über die Welle 6 den Luftverdichter 12 und über eine Kupplung 22 den Generator 24 an. Während dieses Betriebs erzeugt der Generator 24 Wärme, die über einen Kühlkreislauf 26 aus dem Generator 24 ausgetragen wird. Der Kühlkreislauf 26 und ein Wärmetauscher 28 sind Bestandteil einer Kühleinrichtung 30 der Generatoreinheit 8 zum Kühlen des Generators 24. Das Kühlmedium des Kühlkreislaufs 26, beispielsweise Wasser, überträgt Wärme, die es aus dem Generator 24 aufgenommen hat, im Wärmetauscher 28 auf einen Heizkreislauf 32, durch den die Wärme wiederum im Brennstoffvorwärmer 20 auf den Brennstoff in der Brennstoffleitung 18 übertragen wird. Hierdurch wird Generatorabwärme zur Nutzung der Brennstoffvorwärmung verwendet. Dadurch bedingt wird die notwendige Brennstoffmenge zum Erreichen der oberen Prozesstemperatur in der Turbineneinheit 4 verringert und der thermodynamische Wirkungsgrad des Kraftwerks 2 wird erhöht.

Anstelle der Übertragung der Abwärme aus dem Generator 24 auf den Brennstoff in der Brennstoffleitung 18 durch den Brennstoffvorwärmer 20 kann die Abwärme aus dem Generator 24 in Analogie zu dem in FIG 1 dargestellten Ausführungsbeispiel zu einer Gebäudeheizung genutzt werden. Hierfür wäre anstelle des Brennstoffvorwärmers 20 ein Wärmetauscher einzusetzen, der die Abwärme im Heizkreislauf 32 auf einen Gebäudeheizkreislauf überträgt. Ebenfalls denkbar wäre die Führung des Heizkreislaufs 32 direkt durch ein Gebäude und durch beispielsweise entsprechende Heizkörper zur Erwärmung des Gebäudes.

In FIG 2 ist das Kraftwerk 2 mit einer alternativen Kühleinrichtung 36 schematisch dargestellt. Die nachfolgenden Beschreibungen beschränken sich im Wesentlichen auf die Unterschiede zu jeweils vorhergehenden Ausführungsbeispielen, auf die bezüglich gleich bleibender Merkmale und Funktionen verwiesen wird. Im Wesentlichen gleich bleibende Bauteile sind grundsätzlich mit den gleichen Bezugszeichen beziffert und nicht erwähnte Merkmale sind in den folgenden Ausführungsbeispielen übernommen, ohne dass sie erneut beschrieben sind.

Im Unterschied zu FIG 1 ist die Brennstoffleitung 18 mit einer Abzweigung ausgeführt, die durch den Generator 24 hindurchgeführt ist. Durch ein Ventil 38 kann durch ein Steuermittel 34 die Menge des Brennstoffs eingestellt werden, die durch den Generator 24 oder einen Brennstoffvorwärmer 40 hindurchgeführt wird. Im Gegensatz zum vorhergehenden Ausführungsbeispiel wird der Brennstoffvörwärmer 40 nicht mit Abwärme vom Generator 24 thermisch versorgt, sondern von einer anderen Wärmequelle. Durch die Kombination der Wärmeübertragung auf den Brennstoff durch den Brennstoffvorwärmer 40 und die Kühleinrichtung 36 kann der Brennstoff in der Brennstoffleitung 18 auch unabhängig von der im Generator 24 anfallenden Wärme auf eine gewünschte Temperatur erwärmt werden.

Selbstverständlich ist eine zusätzliche Anordnung des Brennstoffvorwärmers 40 auch in der Brennstoffleitung 18 aus FIG 1 möglich und vorteilhaft. Beispielsweise kann er im Brennstoffstrom hinter dem Brennstoffvorwärmer 20 als zusätzliche Wärmequelle zum Erwärmen des Brennstoffs angeordnet sein.

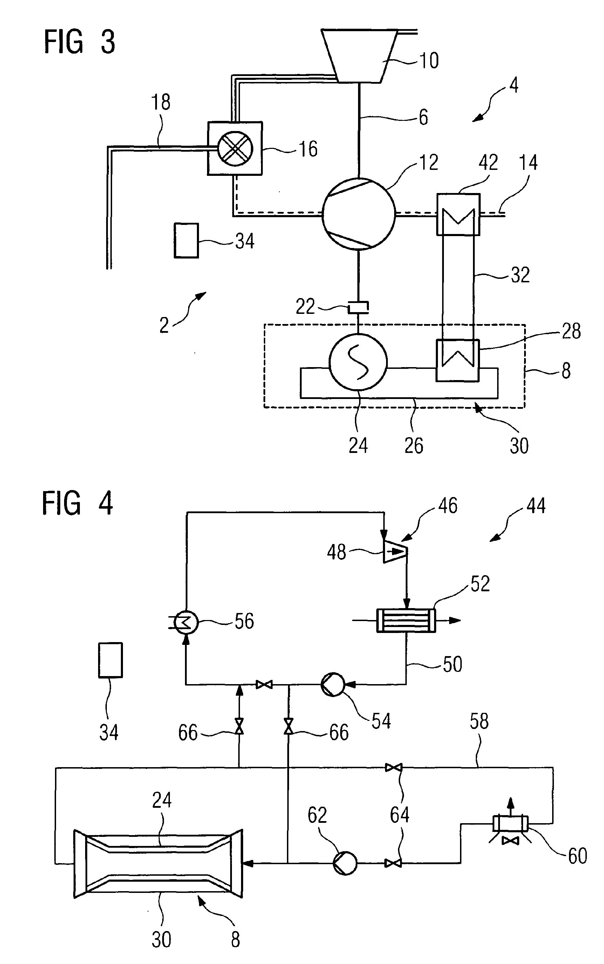

Bei dem in FIG 3 dargestellten Ausführungsbeispiel wird Abwärme aus dem Generator 24 über den Kühlkreislauf 26 und dem Wärmetauscher 28 der Kühleinrichtung 30 über einen Wärmetauscher 42 auf Verbrennungsluft in der Luftzufuhr 14 übertragen. Da insbesondere im Teillastbereich der Gesamtwirkungsgrad eines kombinierten Gas- und Dampfkraftwerks bei fester Leistung erhöht werden kann, wenn die Verdichtereintrittstemperatur der Verbrennungsluft erhöht wird, ist die Verbrennungsluftvorwärmung zur Wirkungsgradsteigerung des Kraftwerks 2 sinnvoll. Nutzt man insbesondere in diesem Leistungsbereich die Generatorabwärme zu diesem Zweck, wird eine entsprechende Erhöhung des thermodynamischen Wirkungsgrads erreicht.

Ein weiterer Vorteil der Erwärmung von Verdichteransaugluft besteht dahin, einer Vereisungsgefahr von Luftfilter, Verdichterdiffusor und den ersten Stufen des Verdichters entgegenwirken zu können. Durch dieses so genannte Anti-Icing wird Verdichteransaugluft zweckmäßigerweise dann erwärmt, wenn diese eine Temperatur um den Gefrierpunkt, also beispielsweise zwischen +5° C und -5° C, aufweist, und wenn eine Luftfeuchtigkeit von über 80 % besteht. Die entsprechende Erwärmung der Verdichteransaugluft wird durch das Steuermittel 34 und nicht dargestellte Mittel zur Wärmeabfuhr aus der Kühleinrichtung 30 gesteuert.

Die schematische Darstellung in FIG 4 zeigt ein Kraftwerk 44 mit einer Turbineneinheit 46, die eine Dampfturbine 48 umfasst. Über einen Speisewasserkreislauf 50 der Turbineneinheit 46 wird die Dampfturbine 48 mit Frischdampf versorgt, der die Dampfturbine 48 antreibt. Entspannter Dampf wird in einem Kondensator 52 kondensiert und durch eine Speisewasserpumpe 54 zur Generatoreinheit 8 geführt, um Wärme aus der Kühleinrichtung 30 der Generatoreinheit 8 mitzuführen zur Vorerwärmung des Speisewassers. In einem Kessel 56 wird das mit der Generatorabwärme vorerwärmte Speisewasser auf sein oberes Temperatur- und Druckniveau gebracht und anschließend als Frischdampf zur Dampfturbine 48 geführt.

Um eine zusätzliche Kühlung der Generatoreinheit 8 zu ermöglichen, umfasst die Kühleinrichtung 30 einen sekundären Kühlkreislauf 58 mit einem sekundären Kühler 60 und einer Kühlwasserpumpe 62. Durch den sekundären Kühlkreislauf 58 kann mit Hilfe des Steuermittels 34 und Ventilen 64 zusätzlich Wärme aus dem Generator 24 ausgetragen werden, auch wenn momentan keine Speisewassererwärmung notwendig ist und der Speisewasserkreislauf durch geschlossene Ventile 66 ruht.

Der Generator 24 ist mit einem Wasser gekühlten Ständer und Kühlkanälen aus korrosionsbeständigem Stahl, beispielsweise V2A, gefertigt, so dass das Speisewasser direkt durch den Ständer hindurchgeführt und so zur Kühlung der Ständerwicklung verwendet werden kann.

Im Vergleich zu reinen Dampfkraftprozessen lässt sich die Menge des Dampfes reduzieren, die zur Vorwärmung des Speisewassers üblicherweise eingesetzt wird und damit nicht mehr zur Energiegewinnung zur Verfügung steht.

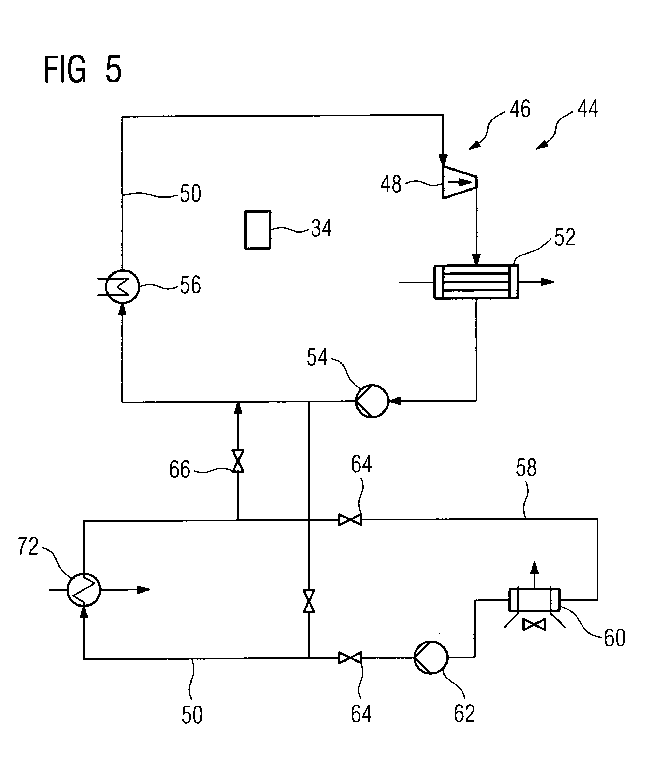

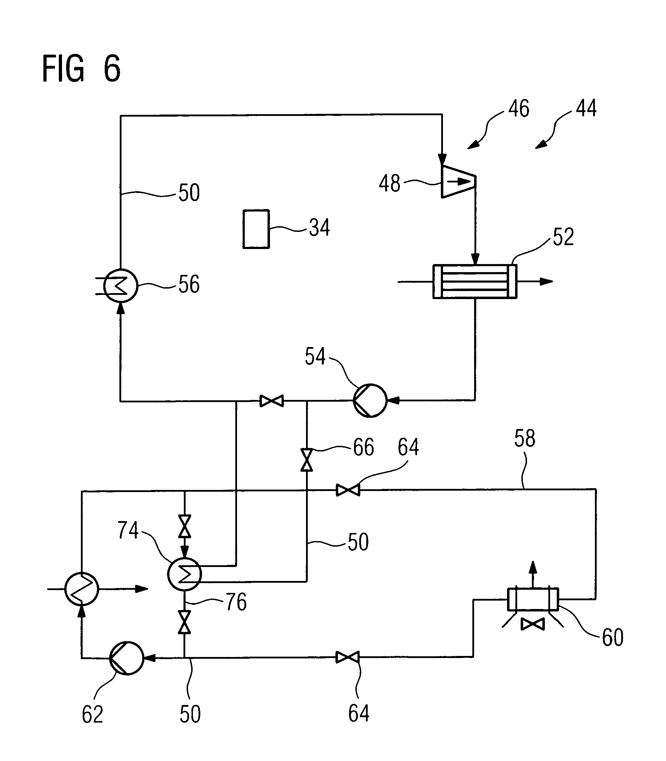

Bei den Ausführungsbeispielen, die in den FIG 5 und 6 gezeigt sind, wird ebenfalls Speisewasser des Speisewasserkreislaufs 50 mit Generatorabwärme erwärmt. Bei dem in FIG 5 gezeigten Aufbau wird das Speisewasser direkt in einem Wärmetauscher 72 am Generator 24 erwärmt. Demgegenüber ist bei dem in FIG 6 dargestellten Ausführungsbeispiel eine mittelbare Einbindung realisiert, bei der auf der Speisewasserseite ein weiterer Wärmetauscher 74 eingesetzt ist und die Abwärme aus dem Generator 24 auf einen separaten Kreislauf 76 auf das Speisewasser übertragen wird.

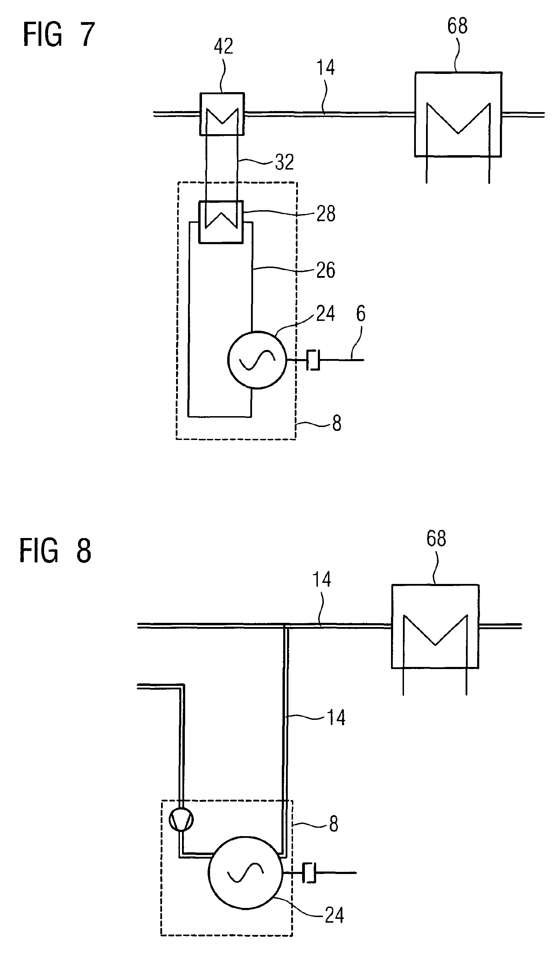

Die FIGen 7 und 8 zeigen Ausschnitte aus einem Kraftwerksaufbau analog zu den FIGen 1 und 2, bei denen Generatorabwärme mittels eines Heizkreislaufs 32 (FIG 7) oder direkt zur Erwärmung von Frischluft zur fossilen Befeuerung des Kraftwerks 2 verwendet wird (FIG 8). Hierzu ist ein Wärmetauscher 42 in der Luftzufuhr 14 zu beispielsweise einem Dampferzeuger bzw. Kessel des Kraftwerks 2 angeordnet zur Erwärmung der Umgebungsluft mit Generatorabwärme. Zur zusätzlichen Erwärmung der Verbrennungsluft steht ein weiterer Wärmetauscher 68 zur Verfügung, der mit Rauchgaswärme gespeist wird. Bei dem Ausführungsbeispiel aus FIG 8 wird die Verbrennungsluft über einen Luftverdichter 70 direkt als Kühlmedium durch den Generator 24 geführt und trägt somit Abwärme aus dem Generator 24 direkt heraus.

Da das Temperaturniveau des Generators 24 und damit des Heizkreislaufs 32 niedriger ist als das Temperaturniveau des Rauchgases und damit des Wärmetauschers 68, wird die Abwärme aus der Generatoreinheit 8 zu einer ersten Vorwärmung der Verbrennungsluft verwendet. Die nachfolgende zweite Vorwärmung auf ein höheres Temperaturniveau geschieht im Wärmetauscher 68.

## Patentansprüche

1. Kraftwerk (2, 44) mit einer Turbineneinheit (4) mit einer Turbine (10), einem zur Kraftübertragung mit der Turbine (10) verbundenen Generator (24) und einer Kühleinrichtung (30, 36) zum Kühlen des Generators (24),
**dadurch gekennzeichnet, dass** die Kühleinrichtung (30, 36) dazu vorgesehen ist, Abwärme aus dem Generator (24) an eine Einrichtung des Kraftwerks (2, 44) abzugeben.

2. Kraftwerk (2) nach Anspruch 1,
**dadurch gekennzeichnet, dass** die Turbineneinheit (4) einen Brennstoffvorwärmer (20) umfasst, der mit der Kühleinrichtung (30) thermisch verbunden ist.

3. Kraftwerk (2) nach Anspruch 2,
**dadurch gekennzeichnet, dass** der Brennstoffvorwärmer (20) einen Wärmetauscher aufweist, der mit einem Kühlkreislauf (26) der Kühleinrichtung (30) thermisch verbunden ist.

4. Kraftwerk (2) nach einem der vorhergehenden Ansprüche,
**dadurch gekennzeichnet, dass** eine Brennstoffzuführung (18) zur Turbine (10) zum Erwärmen des Brennstoffs durch den Generator (24) geführt ist.

5. Kraftwerk (2, 44) nach einem der vorhergehenden Ansprüche,
**dadurch gekennzeichnet, dass** die Turbineneinheit (4) eine Luftzuführung (14) aufweist, die mit der Kühleinrichtung (30, 36) thermisch verbunden ist.

6. Kraftwerk (2, 44) nach einem der vorhergehenden Ansprüche,
**gekennzeichnet durch** ein Steuermittel (34) zum Steuern einer Wärmezufuhr vom Generator (24) zu einer Luftzuführung (14) der Turbineneinheit (4) in Abhängigkeit einer Vereisungsgefahr der Luftzuführung (14).

7. Kraftwerk (2, 44) nach einem der vorhergehenden Ansprüche,
**dadurch gekennzeichnet, dass** die Kühleinrichtung (30, 36) einen offenen Kühlkreislauf und eine Kühlluftzuführung zu einer Luftzuführung (14) der Turbineneinheit (4) aufweist.

8. Kraftwerk (2) nach einem der vorhergehenden Ansprüche,
**dadurch gekennzeichnet, dass** die Turbineneinheit (4) einen Luftvorwärmer aufweist, der in einer kühleren Stufe thermisch mit der Kühleinrichtung (30) und in einer wärmeren Stufe mit einer Rauchgaszufuhr verbunden ist.

9. Kraftwerk (44) nach einem der vorhergehenden Ansprüche,
**dadurch gekennzeichnet, dass** die Kühleinrichtung (36) mit einem Speisewasserkreislauf (50) der Turbineneinheit (4) thermisch verbunden ist.

10. Kraftwerk (44) nach einem der vorhergehenden Ansprüche,
**dadurch gekennzeichnet, dass** die Kühleinrichtung (36) einen Kühlwasserkreislauf umfasst, der Teil eines Speisewasserkreislaufs (50) der Turbineneinheit (4) ist.

11. Kraftwerk (2) nach einem der vorhergehenden Ansprüche,
**dadurch gekennzeichnet, dass** die Kühleinrichtung (30, 36) thermisch mit einer Gebäudeheizung des Kraftwerks (2) verbunden ist.
